# EUROPEAN PATENT SPECIFICATION

(11) **EP 1 300 293 B1**
(45) Date of publication and mention of the grant of the patent: **01.12.2004**
(21) Application number: 01123401.0
(22) Date of filing: 28.09.2001
(51) Int. Cl.: B60R 19/12, B60R 19/56, B60R 21/34

(54) **Motor vehicle with bumper assembly for pedestrian protection**
Kraftfahrzeug nit Stossstangenanordnung zum Fussgängerschutz
Véhicule avec pare-chocs pour la protection des piétons

(43) Date of publication of application: 09.04.2003
(73) Proprietor: Ford Global Technologies, LLC, Dearborn, MI 48126 (US)
(72) Inventor: Howard, Mark Shane, 52070 Aachen (DE)
(74) Representative: Drömer, Hans-Carsten, Dipl.-Ing.

(56) References cited:
- EP-A- 1 000 840
- EP-A- 1 072 476
- EP-A- 1 103 428
- WO-A-00/58144
- GB-A- 2 355 435

## Description

The present invention relates to a motor vehicle with a bumper assembly for pedestrian protection in accordance with the preamble of claim 1.

It is known to provide a bumper assembly for a front end of a motor vehicle, modified for the purpose of pedestrian protection. One important aspect is to catch the lower leg of a pedestrian when a running vehicle is collided with a pedestrian.

WO 0058144 discloses a combined bumper skin and under-engine fairing arrangement according the preamble of claim 1. The fairing is mounted to the rear of the bumper skin in relation to the principal direction in which the vehicle travels and is attached to the engine compartment. The fairing comprises a front transverse section member, which supports the lower the bumper skin. The arrangement offers a stiff solution for the lower edge of the bumper. In case of an impact at higher speeds the leg of a pedestrian can be hit to hard because of the stiff support of the undertray.

According to DE 30 03 568 this could be achieved with a stiffening bar at the lower edge of the bumper, extending in forward direction. During a collision the lower edge will catch the lower leg of the pedestrian, so the leg is not bend under the vehicle.

Another stiffener assembly for a bumper system is disclosed in EP 0 983 909. A stiffener is operatively connected to the bumper system under the bumper beam and is moveable between an up position and a down position based on a speed of the motor vehicle.

From JP 11078743 a bumper holding device is known comprising an upper and a lower bumper beam, and a bumper fascia in front of the beams. Several upper and lower plates extends from the bumper fascia to the beams, while forming bent line-form states. In case of a collision with a pedestrian the impact force on the pedestrians leg is absorbed by plastic deformation of the plates.

Although the above bumper systems may work well, they all need an additional bumper bar and therefore need additional manufacturing efforts.

Accordingly, it is an object of the present invention to provide a motor vehicle with a bumper assembly with superior pedestrian protection behaviour and minor manufacturing effort.

This object is achieved in that the motor vehicle comprises the features according to claim 1.

The invention provides an undertray, which is fixed at its forward end to the lower edge of the fascia, whereby the undertray extends for the most part rearwards and whereby the undertray is fixed at its rearward end to the vehicle, but not at the bumper assembly. The advantage of this invention is that an undertray exists anyway, mostly used for noise damping and/or aerodynamic improvement at the lower frontend of a motor vehicle. While extending the undertray to the lower edge of the bumper, the undertray serves as a additional stiffener of the bumper fascia. Therefore no extra lower bumper beam or stiffener is required.

To fulfil the object of stiffening the bumper fascia, the undertray is fixed to the bumper fascia. Depending on the materials used in both parts, the fixing could be done by bolting, by screwing, by bonding, by welding, by using additional parts like bump stops or any other fixing method. Furthermore the undertray is designed in such a way, that it fulfils the stiffening requirements for catching a pedestrians lower leg.

At its rearward end the undertray is fixed somewhere to the vehicle, but not directly to the bumper assembly. This reduces the manufacturing effort in so far, as additional fixings are not required, neither on the bumper nor on the vehicle itself as the undertray fixings are in place anyway.

The undertray comprises a line of less bending stiffness, which is mainly oriented parallel to the lower edge of the bumper fascia, dividing the undertray in a forward impact part and a rearward support part. This line of less bending stiffness acts like a hinge in the undertray. When both the lower edge of the fascia and the forward end of the undertray are subjected to an impact load due to the hit of a lower leg, the impact part of the undertray bends at the line of less stiffness, while the support part remains in position. The bending absorbs energy, which results in a softer impact load at the lower edge of the fascia. By choosing both the appropriate distance between the forward edge and the line, and the actual bending stiffness at the line, the impact absorption of the undertray could be tuned at the lower edge of the fascia to minimize injuries of the lower leg of the pedestrian.

To understand forward and rearward end of the undertray, one must say, that forward end means mainly the area of the undertray which is nearer to the front edge of the undertray than to the rear edge of the undertray, related to vehicle direction, and the rearward end of the undertray is the area, which is nearer to the rear edge of the undertray than to the front edge of the undertray. That all means, that forward end means not solely the front edge and rearward end not solely the rear edge of the undertray, as fixings are also possible in the middle of the undertray between front and rear edge.

In a preferred embodiment the undertray is fixed at its rearwards end to the cooling pack of the vehicle. As the cooling pack is arranged behind the bumper beam and the cooling pack extends much more towards the ground compared to the bumper beam, the cooling pack offers excellent opportunities for fixing the undertray with minor efforts. No big brackets or other support parts are required. As already mentioned, the fixing of the undertray to the cooling pack must not be necessarily at the rear edge of the undertray. The undertray could also extend further in rearward direction of the vehicle. This may be required as the undertray must not only serve for stiffening up the bumper fascia, but also must fulfil the noise reduction and aerodynamic requirements.

In other preferred embodiments the undertray is fixed at its rearward end to a chassis part and/or to an engine part. As discussed above, all parts of the vehicle extending towards the ground could be used preferably for fixing the undertray. In some cases, when the undertray extends to much in rearward direction of the vehicle, it is necessary anyway to have additional fixing points other than at the bumper beam or at the cooling pack.

Advantageously the undertray is made from a sandwich material. This offers the required bending stiffness for such a big part, which is loaded through aerodynamic flow during normal service, and, heavily loaded during a collision with an pedestrian, when the lower leg hits the lower edge of the bumper fascia and the impact load is transferred to the undertray.

Another preferred embodiment of the undertray comprises a pattern of ribs and grooves, which allows control of the deformation modes of the undertray. This is necessary, when the undertray and the fascia as one part must be tuned to the deformation behaviour for the lower leg, regardless where the impact of the lower leg happens, that means more inboard or more outboard.

In a further advantageous embodiment the undertray comprises a guided mount with collapsible tubes. The tubes are arranged between the undertray and the fascia of the bumper. The guided mount connects the undertray and the fascia, but allows a relative movement in longitudinal direction. By this the undertray serves as a stiff support for the tubes, while the collapsible tubes provides a soft support respectively a controlled support for the lower edge of the bumper fascia in longitudinal direction.

In a further, similar embodiment the undertray comprises a guided mount with bump stops. Undertray, guided mount and fascia are arranged the same way as before, only the collapsible tubes are replaced by elastically deformable bump stops.

Advantageously at least the impact part or the support part of the undertray is stiffened by swages. This allows to create a stiff support part and/or impact part, so that bending along the line of less bending stiffness is guaranteed in case of an impact, and no uncontrolled deformation of the undertray could took place.

Further advantageous embodiments and designs are to be found in the drawings, in which:
- Fig. 1: shows a perspective view of the bumper assembly;
- Fig. 2: shows a cross sectional view of the bumper assembly and the cooling pack;
- Fig. 3: shows a cross sectional view of the bumper assembly at the body front side rail
- Fig. 4a: shows a cross sectional view of the undertray with a line of less bending stiffness; and
- Fig. 4b: shows the bending of the undertray in Fig. 4a.

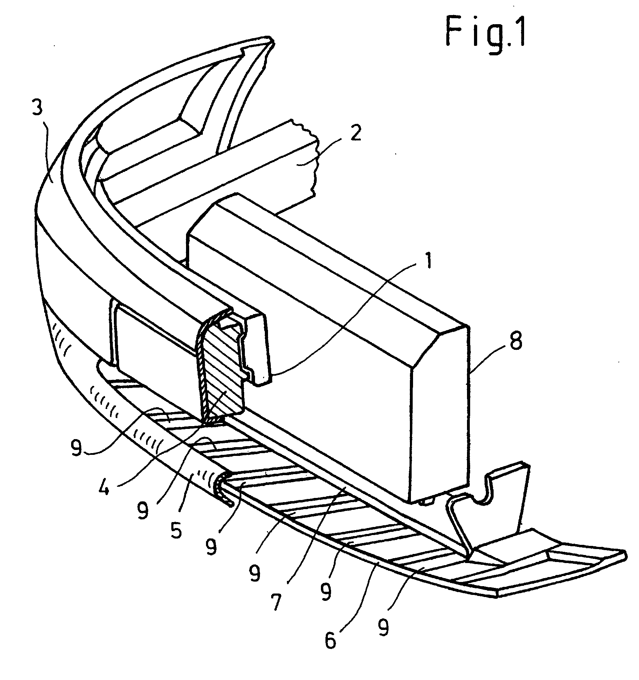

The bumper assembly in figure 1 comprises a bumper beam 1, which extends transversely and is secured to a forward end of a pair of front rails 2 of the vehicles body. The bumper beam 1 is a made of a relatively rigid material such as metal. The shape of the bumper beam 1 may be a hollow section or any other profile. The outer surface of the bumper assembly is formed by the bumper fascia 3, which extends both transversely and downwardly. A foam block 4 is arranged between bumper fascia 3 and bumper beam 1, which absorbs the impact energy when a pedestrian hit the bumper in case of a collision.

The bumper fascia 3 forms downwardly a lower edge 5, which catches the lower leg of a pedestrian during a collision with the vehicle. Without further stiffening the lower edge 5 of the fascia would be to weak to catch the leg. Therefore the undertray 6 is connected to the lower edge 5, stiffening it up so that it will withstand the impact of the leg and will catch the lower leg properly.

The undertray 6 is attached at its rearward end to the cooling support 7 of the cooling pack 8. As the cooling support 7 is connected rigidly with the side rails, a stiff attachment of the undertray 6 is ensured. For adjusting the stiffening behaviour the undertray 6 comprises several swages 9. In this case the swages 9 extends in longitudinally direction, but they could also be arranged in transversally direction. Also the swages could be replaced by patterns of ribs and grooves. Furthermore it should be appreciated that the undertray is connected to other parts, for example chassis or engine, to achieve an even more stiffening behaviour.

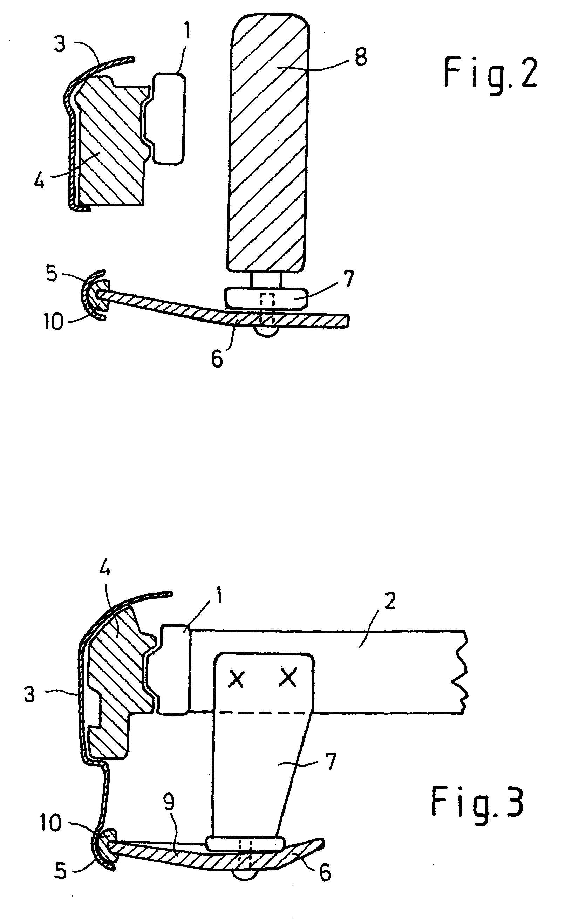

A cross sectional side view of the bumper assembly at the centre line is illustrated in Figure 2. While the bumper fascia 3 is supported upwardly by the bumper foam 4 and the bumper beam 1, the lower edge 5 of the fascia 3 is supported by the undertray 6. To gain a stiff connection between fascia 3 and undertray 5, which could be separated for service purposes, several elastic bump stops 10 are arranged in the groove of the lower edge 5. The undertray 6 is supported in the cut-outs of the each bump stops, so longitudinally forces resulting from a lower leg impact could be transferred from the lower edge 5 via the bump stops 10 and the undertray 6 to the cooling pack support 7. It is also shown in this section that the undertray extends rearward behind the cooling pack. This could be required by aerodynamics and/or for noise reduction.

Figure 3 shows the cross sectional view of the bumper assembly at a side rail 2. The cooling pack support 7 is attached to the side rail 2, therefore comprising a stiff support for the undertray 6. Swages 9 in the undertray 6 allows tuning of the stiffening behaviour of the whole system bumper fascia 4, bump stops 10, undertray 6 with swages 9 and cooling support.

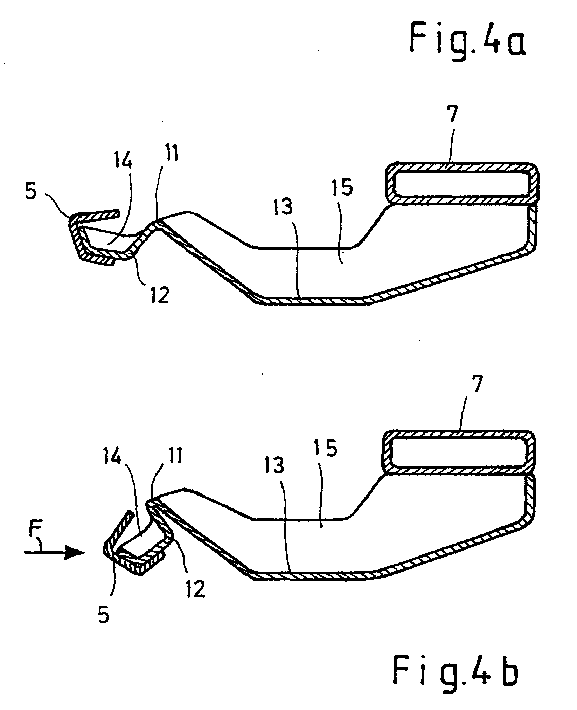

Figure 4a shows a cross sectional view of the undertray with the line 11 of less bending stiffness, which is mainly oriented parallel to the lower edge 5 of the bumper fascia, dividing the undertray in a forward impact part 12 and a rearward support part 13. The support part 13 is fixed to the cooling pack support 7. Both the impact part and the support part are stiffened by swatches 14, 15, but the swatches on both parts are divided by the line 11, so that at the line 11 the hinge effect could occur due to the undertray's minor bending stiffness at the line while both parts remain stable itself.

This effect is shown in Figure 4b, where the lower edge 5 is subjected to an impact load F. Due to the hinge effect at the line 11, the whole impact part 12 and the lower edge 5 are bending around the line 11, while the stiff support part 13 stays in position.

Depending on the distance between line 11 and the lower edge 5, and the bending stiffness of the undertray at line 11, the relation between impact load F and displacement of the lower edge 5 could be tuned according to the minimization of lower leg injuries.

## Claims

1. Motor vehicule with a bumper assembly for pedestrian protection, comprising at least a bumper beam (1) and a bumper fascia (3), whereby
an undertray (6) is fixed at its forward end to the lower edge (5) of the fascia (3), the undertray (6) extends for the most part rearwards and the undertray (6) is fixed at its rearward end to the vehicle, but not at the bumper assembly,
**characterised in that**
the undertray comprises a line (11) which is mainly oriented parallel to the lower edge (5) of the bumper fascia, dividing the undertray in a forward impact part (12) and a rearward support part (13), whereby said line (11) has less bending stiffness than said forward impact part (12) and said rearward support part (13).

2. Bumper assembly according to claim 1,
**characterised in that**
the undertray (6) is fixed at its rearward end to a cooling pack (8).

3. Bumper assembly according to claim 1,
**characterised in that**
the undertray (6) is fixed at its rearward end to a chassis part.

4. Bumper assembly according to claim 1,
**characterised in that**
the undertray (6) is fixed at its rearward end to an engine part.

5. Motor vehicle according to one of the preceeding claims,
**characterised in that**
at least the impact part (12) or the support part (13) of the undertray is stiffened by swages (14, 15).

## Patentansprüche

1. Kraftfahrzeug mit einer Stoßfängeranordnung zum Fußgängerschutz, mit mindestens einem Stoßfängermittelteil (1) und einer Stoßfängerverkleidung (3), wobei eine Bodenplatte (6) an ihrem Vorderende am Unterrand (5) der Verkleidung (3) befestigt ist, die Bodenplatte (6) sich größtenteils nach hinten erstreckt und an ihrem Hinterende am Fahrzeug, aber nicht an der Stoßfängeranordnung, befestigt ist,
**dadurch gekennzeichnet, dass**
die Bodenplatte eine Linie (11) umfasst, die in erster Linie parallel zum Unterrand (5) der Stoßfängerverkleidung ausgerichtet ist und die Bodenplatte in einem vorderen Aufprallteil (12) und einen hinteren Stützteil (13) unterteilt, wobei die Linie (11) eine geringere Biegesteifigkeit aufweist als der vordere Aufprallteil (12) und der hintere Stützteil (13).

2. Stoßfängeranordnung nach Anspruch 1,
**dadurch gekennzeichnet, dass**
die Bodenplatte (6) an ihrem Hinterende an einer Kühlpackung (8) befestigt ist.

3. Stoßfängeranordnung nach Anspruch 1,
**dadurch gekennzeichnet, dass**
die Bodenplatte (6) an ihrem Hinterende an einem Fahrgestellteil befestigt ist.

4. Stoßfängeranordnung nach Anspruch 1,
**dadurch gekennzeichnet, dass**
die Bodenplatte (6) an ihrem Hinterende an einem Motorteil befestigt ist.

5. Kraftfahrzeug nach einem der vorhergehenden Ansprüche,
**dadurch gekennzeichnet, dass**
mindestens der Aufprallteil (12) oder der Stützteil (13) der Bodenplatte durch Riffelungen (14, 15) versteift ist.

## Revendications

1. Véhicule à moteur avec un ensemble de pare-chocs pour la protection des piétons, comprenant au moins une poutre de pare-chocs (1) et un habillage de pare-chocs (3),
une plaque inférieure (6) étant fixée à son extrémité avant au bord inférieur (5) de l'habillage (3), la plaque inférieure (6) s'étendant sur sa majeure partie vers l'arrière et la plaque inférieure (6) étant fixée à son extrémité arrière au véhicule, mais pas à l'ensemble de pare-chocs, **caractérisé en ce que** la plaque inférieure comprend une ligne (11) qui est principalement orientée parallèlement au bord inférieur (5) de l'habillage de pare-chocs, divisant la plaque inférieure en une partie d'impact avant (12) et une partie de support arrière (13), ladite ligne (11) ayant moins de rigidité en flexion que ladite partie d'impact avant (12) et ladite partie de support arrière (13).

2. Ensemble de pare-chocs selon la revendication 1,
**caractérisé en ce que**
la plaque inférieure (6) est fixée à son extrémité arrière à un bloc de refroidissement (8).

3. Ensemble de pare-chocs selon la revendication 1,
**caractérisé en ce que**
la plaque inférieure (6) est fixée à son extrémité arrière à une partie de châssis.

4. Ensemble de pare-chocs selon la revendication 1,
**caractérisé en ce que**
la plaque inférieure (6) est fixée à son extrémité arrière à une partie du moteur.

5. Véhicule à moteur selon l'une quelconque des revendications précédentes,
**caractérisé en ce qu'**au moins la partie d'impact (12) ou la partie de support (13) de la plaque inférieure est rigidifiée par des estampes (14, 15) .
